# EUROPEAN PATENT SPECIFICATION

(11) **EP 2 800 668 B1**
(45) Date of publication and mention of the grant of the patent: **27.04.2016**
(21) Application number: 12816249.2
(22) Date of filing: 28.12.2012
(51) Int. Cl.: B60K 7/00, H02K 7/116, H02K 7/102, H02K 11/00

(54) **MOTOR-REDUCER WITH INTEGRATED BRAKE AND INVERTER FOR DIRECT TRANSMISSION TO THE WHEEL OF AN ELECTRICALLY DRIVEN VEHICLE**
MOTOR-REDUZIERER MIT INTEGRIERTER BREMSE UND WECHSELRICHTER FÜR DIREKTÜBERTRAGUNG AN DAS RAD EINES ELEKTRISCH ANGETRIEBENEN FAHRZEUGS
MOTEUR-RÉDUCTEUR AVEC FREIN ET ONDULEUR INTÉGRÉS POUR UNE TRANSMISSION DIRECTE À LA ROUE D'UN VÉHICULE ÉLECTRIQUE

(30) Priority: 03.01.2012 IT UD20120001
(43) Date of publication of application: 12.11.2014
(73) Proprietor: PMP Pro-Mec S.p.A., 33030 Coseano (UD) (IT)
(72) Inventor: POZZO Luigino, I-33030 COSEANO (UD) (IT)
(74) Representative: D'Agostini, Giovanni
(86) International application number: PCT/EP2012/005390
(87) International publication number: WO 2013/102484

(56) References cited:
- EP-A2- 1 985 487
- WO-A1-2007/022865
- DE-A1- 10 219 922
- DE-U1-202005 020 623

## Description

### Technical field

The present invention relates to a gear-motor with integrated brake and inverter for direct transmission to the wheel of an electrical traction vehicle according to the characteristics of the pre-characterizing part of claim 1.

The electric-traction vehicle with said gear-motor with integrated brake and inverter is also part of the present invention, according to the characteristics of the pre-characterizing part of claim 22.

### Prior art

In the field of motion transmission to the driving wheels of vehicles, particularly industrial vehicles, e.g. tractors, forklift trucks, or operating machines, electric or hydraulic motors are normally used.

Motors are commonly associated to a mechanical gear-reducing device that transmits motion to the wheels.

Compact configurations of these gear-reducing devices exist, called axles, which dispense the torque supplied by a single motor to the two wheels by means of a distribution differential group. Other axle configurations provide the use of two motors, one for each wheel.

A second configuration of the traction system provides the use of two completely independent transmissions, one for each driving-wheel, with the aid of a transmission system with incorporated gear-reducing device and brake.

The steering is controlled by an electronic system monitoring signals from the speed sensors on each of the two motors and by a transducer measuring the steering angle. The current trend aims at using faster and faster, as well as more and more compact, electric motors, in order to reduce the external encumbrance of the gear-motor system and end users require more and more silent machines.

### Closest prior art to the invention

Among the prior art techniques, the closest solution to the present invention is the one described in patent WO2007022865, of the same applicant. WO2007022865, describing a gear-motor with integrated brake for direct drive to the wheel of an electric-traction vehicle in which the traction motor is integrated with a reduction transmission connected to the driving-wheel, and in which the traction motor includes a passing driving axle including a pinion on the wheel side which internally gears to the reducer-transmission system integrated with the wheel for the traction motion in a corresponding gear chamber and on the side opposite to the wheel is keyed to a braking system, which is also integrated, and cased with the same assembly, in a corresponding opposite braking chamber forming a detachable motor-brake assembly and in which the transmission reducing group is housed in a structural supporting casing connectable to the vehicle and the motor group has its supporting casing fixed as a cover to the structural supporting casing covering the reducing system and allowing free access after its opening.

Issues of the prior art

The prior art techniques providing the use of the axle configuration highly limit designers of industrial vehicles, as the axle size and its encumbrance do not allow a full operational freedom, since the vehicle track, the vehicle frame shape and, in case of forklift trucks, the anchorage system choice of the stanchion, remain fixed.

The traction system configurations providing the use of two completely independent transmissions, one for each driving-wheel, with the aid of a transmission system with integrated gear-reducing device and brake do not limit the designer, showing however issues in terms of high costs in their embodiments and having numerous additional components that need to be duplicated and arranged on the vehicle, this determining an increase of required space for the installation of transmission control components. Drawbacks of the present state of the art also include:
- The need to apply a connection system between the motor shaft and the gear-reducing device input, with consequent increase of the total encumbrance;
- alignment difficulty between motor and transmission, which can possibly imply, among other things, the wearing of components and the occurrence of unexpected noise, besides a possible overall system instability;
- higher costs, since supporting means suitable for all rotating devices must be provided;
- introduction of significant restrictions to the machine design, in case of transmission by means of rigid axles.

The configuration providing two separate transmissions requires the arrangement of a double wiring carrying the power supply and thermal and speed sensor cables to the electronic control junction box.

Even the solution described in WO2007022865 shows drawbacks due to the overall encumbrance of the gear-motor device and to the size of its corresponding components to take into account transmitted power and torque. Additionally, it is necessary to provide the positioning of control devices on the electric-traction vehicle and arrange the corresponding wiring between the control devices and the gear-motor group, with the consequent need to carefully analyse the installation to take into account even the running of all wirings, including power wirings and motor control wirings.

### Aim of the invention

The aim of this invention is that of implementing a compact and highly reliable integrated gear-motor device with braking function and electronic control, being cost-effective in terms of implementation, installation and maintenance.

### Concept of the invention

The aim is achieved by means of the characteristics of the main claim. Sub-claims represent advantageous solutions.

### Advantageous effects of the invention

The solution in accordance with the present invention, by means of the significant creative contribution the effect of which constitutes an immediate and non-negligible technical progress, shows many advantages.

The system in accordance with the present invention allows providing a motor being highly compact and, as a result, cost-effective and easy to install.

Moreover, the maximum transmission input torque is shown to be almost halved, allowing the use of smaller gears; particularly, the input pinion can be easily produced directly on the motor shaft.

Moreover, the reduction ratio of the gear-reducing device increases proportionally to the speed.

Finally, by arranging an emergency dynamic brake or a parking-brake between motor and gear-reducing device, this will have to develop a little braking torque, with consequent advantages in terms of component sizing, weight, total cost, operational cost-effectiveness and energy saving.

Furthermore, the invention solution considerably reduces the length of power cables that run from the motor control inverter to the motor itself, with significant advantages in terms of installation and maintenance simplicity, as well as in terms of overall costs.

### Description of the drawings

The following describes a performable solution with reference to the attached drawings, which shall be considered as a non-limitative example of the present invention in which:
Fig. 1 shows a partially sectional view of the gear-motor with integrated brake and inverter for direct drive to the wheel in conformity with the present invention.
Fig. 2 shows an enlarged partially sectional view of the clutch portion of the gear-motor engine with integrated brake and inverter for direct drive to the wheel in conformity with the present invention.
Fig. 3 shows a three-dimensional view of the central part of the gear-motor with integrated brake and inverter for direct drive to the wheel in conformity with the present invention, illustrating the operation of the integrated brake.
Fig. 4 shows an enlargement of the detail indicated with ""A" in figure 1.
Fig. 5 shows an enlargement of the detail indicated with ""C" in figure 3.
Fig. 6 shows an exploded schematic view of the gear-motor with integrated brake and inverter for direct drive to the wheel in conformity with the present invention.
Fig. 7 shows an enlargement of the detail indicated with ""B" in figure 1.
Fig. 8 shows an enlargement of the detail indicated with ""D" in figure 7.

### Description of the invention

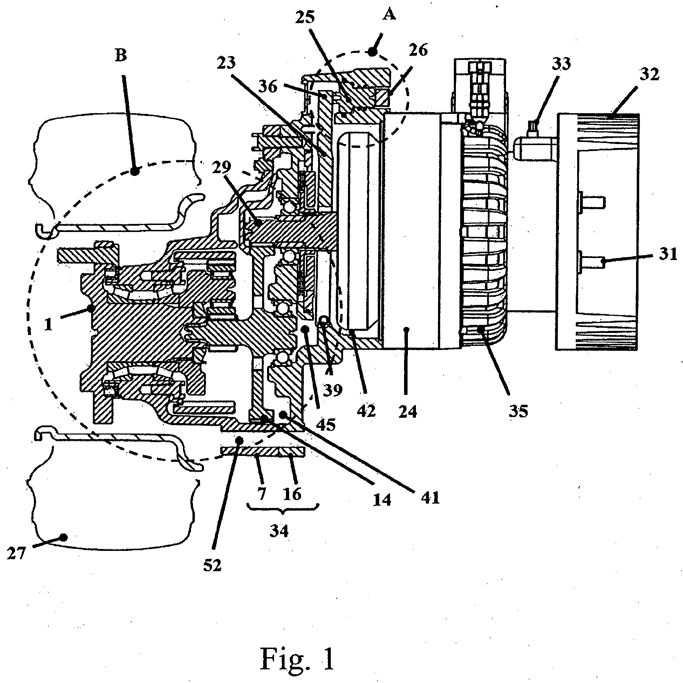

With reference to the figures, the gear-motor with integrated brake and inverter for direct transmission to the wheel according to the present invention allows obtaining a single body consisting (Fig. 1, Fig. 7, Fig. 6, Fig. 5) of the gear-reducing device (50), the motor (24), the brake (49), the inverter (32). A compact and resisting solution is therefore obtained with all the advantages provided by an integrated compact unit. Advantageously, the casing (34) of the gear-motor consists of a first casing being the cover (16) and a second casing being the box (7) forming the entire body or casing (34) containing both the motor (24) and the gear-reducing device (50) becoming an integral part of the transmission. This solution advantageously allows full access to the gear-motor since, by dismantling the casing (34), the gear-motor opens very easily in two parts showing, on one side, the gear-reducing device (50) with full access to its elements from the inside of the vehicle and, on the other side, the motor (24) and the inverter (32) which are also completely and easily accessible since they can be completely detached from the vehicle by simply unscrewing a number of bolts. Advantageously, all misalignment and coupling issues possibly arising during the installation of an external motor can be therefore avoided. The casing (34) includes one or more chambers (41,42) which may be used as an oil reserve for the braking chamber and/or as a recirculation channel of the oil itself, in case all the reducer oil is to be used for cooling purposes.

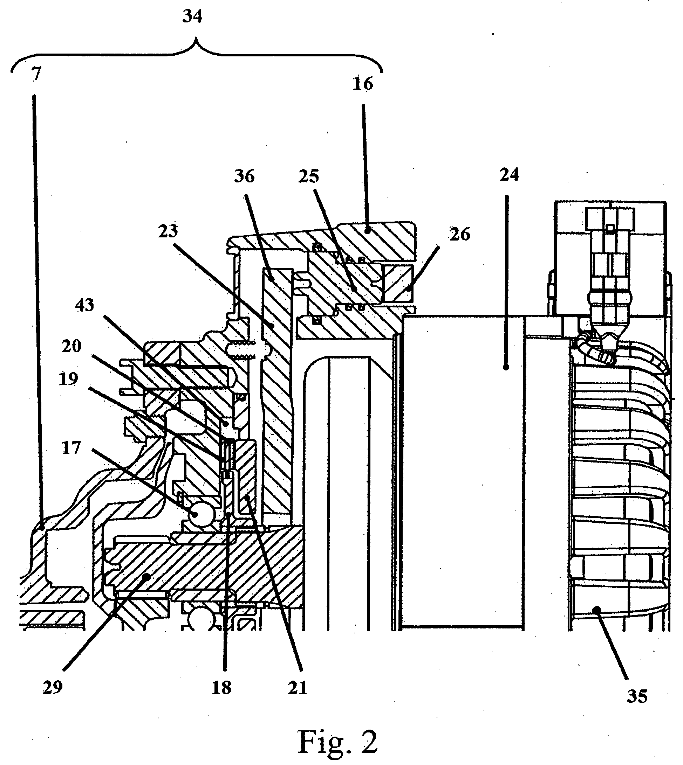

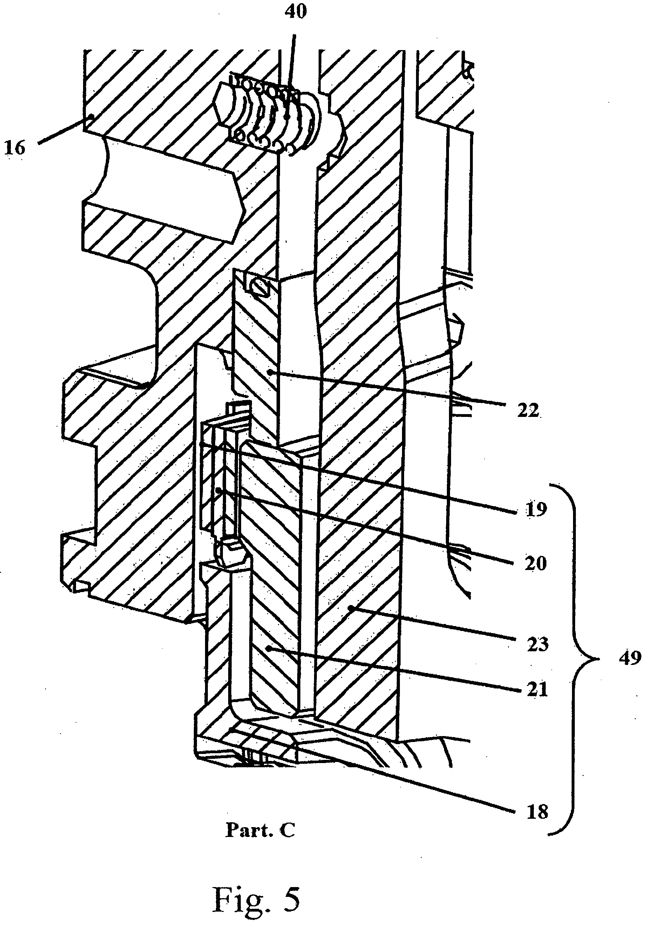

In the solution according to the present invention the motor (24) shaft also directly constitutes the first pinion (29) of the first stage of reduction of the gear-motor. In fact (Fig. 1, Fig. 2) the first pinion (29) or pinion of the first stage of reduction is directly obtained on the shaft of the motor (24). Furthermore, the shaft of the motor (24) also constitutes the connection element for the application of the braking system (49) since (Fig. 5) the friction disc (20) of the brake, or second disc, is connected to the first pinion (29), i.e. to the shaft of the motor (24) itself, by means of a first flange (18) or dragging flange, to perform the braking action directly given by the friction elements on the first pinion (29), namely directly on the shaft of the motor (24). The dragging flange (18) is inwardly radially engaged on the shaft of the motor (24) or on the first pinion of the gear-reducing device (50), in case they are constructed as different elements. The dragging flange (18) is outwardly radially engaged on the friction disc (20). The dragging flange (18) puts in rotation the friction disc (20) at a rotational speed corresponding to the rotational speed of the shaft of the motor (24) or of the first pinion of the gear-reducing device (50).

Consequently the shaft of the motor (24) performs the triple function of:
- input gear of the gear-reducing device or first pinion (29);
- actual shaft of the motor (24);
- application connection of the braking system (49).

This solution produced a very cost-effective and compact transmission able to reach almost absolute constructive precision limits: by obtaining the input gear of the gear-reducing device, namely the first pinion (29), directly on the shaft of the motor (24) the reduction gears can be increased with consequent possibility to increase the rotational speed of the motor thanks to a highly precise construction.

Furthermore, unlike the prior art techniques, the present invention provides the use of a high-speed motor (24), which is made possible by the fact that, thanks to the integration of the motor (24) itself with the gear-reducing device, a single body is formed with a particularly precise coupling. The use of a high-speed motor, for example a motor with maximum speed of about 8000 to12000 RPM, allows important advantages compared to the prior art techniques:
- the motor is particularly compact and therefore cost-effective and light. For example the solution according to the present invention allows the use of high rotational speed and highly compact motors so that, compared to a solution performed with a standard motor, the use of such motor allows a reduction of the encumbrance beyond the frame connection flange towards the inside of the machine by 40%. Moreover, compared to a solution performed with a standard motor, the use of this motor allows working with a double maximum input transmission speed, i.e. with a 100% increase, with all deriving benefits, as explained by the present description;
- the maximum input torque is almost halved compared to the configurations of the previous art, allowing the use of smaller gears for the gear-reducing device; particularly the first input pinion (29) of the gear-reducing device can be easily constructed directly on the shaft of the motor (24);
- the reduction ratio of the gear-reducing device (50) increases proportionally to the speed;
- by applying an emergency dynamic brake (49) or a parking brake between the motor (24) and the gear-reducing device (50), with equal exerted braking action, the brake (49) will have to develop a moderate braking torque.

The gear-motor can provide or not provide the use of oil-immersed motors, thus performing a system in which the oil of the gear-reducing device recirculates through appropriate channels passing through the motor (24) and the brake (49), however without passing close to the motor rotor to perform an overall cooling form of the gear-motor in general: it is therefore possible to avoid the use of sealing gaskets among motor (24), gear-reducing device (50) and brake (49), to the benefit of its mechanical efficiency.

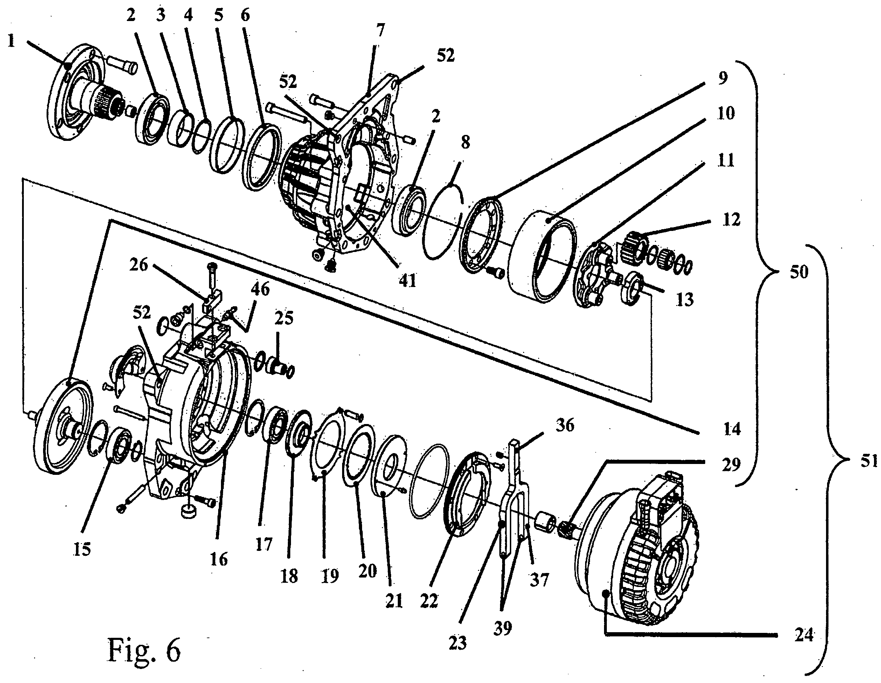

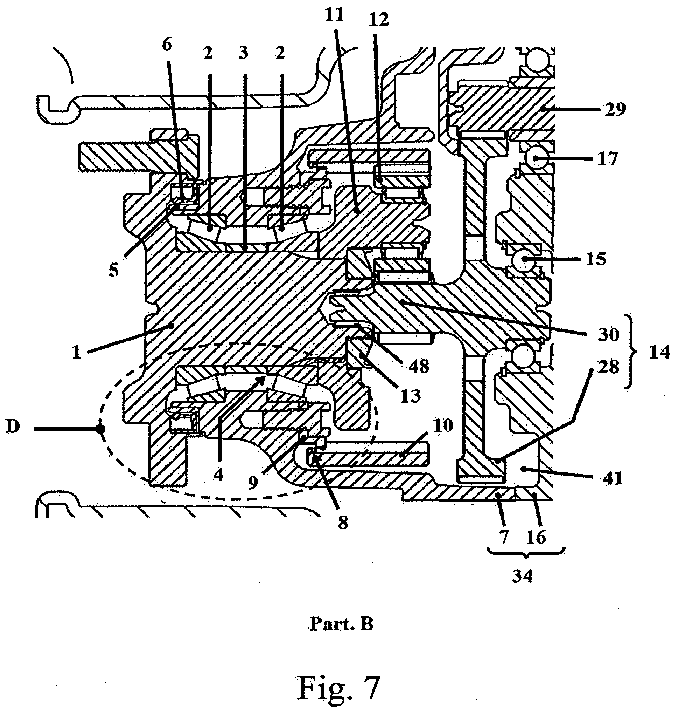

The motor wheel (27) is actuated by the respective hub (1) which is integrated or however integral (Fig. 7) with the spider (11) of the second stage of reduction of the gear-reducing device (50), this second stage of reduction being an epicycloidal reduction stage. In the shown embodiment the spider (11) is fixed (Fig. 6, Fig. 7) to the hub (1) by means of a locking ring (13) screwing on a corresponding threaded portion protruding from the hub (1). Internally and axially to the protrusion comprising the threaded portion, an insertion seat for sliding and support means (48) of the end of the second pinion (30) of a transmission (14) of the gear-motor is obtained on the hub (1). The transmission (14) is supported on the opposite side with respect to the side where the second pinion (30) is obtained, by means (Fig. 6, Fig. 7) of a second bearing (15) or transmission bearing applied on the cover (16). The transmission is thus rotationally supported by the cover (16) and by the hub (1).

The spider (11) in turn receives the motion by means of satellites (12) of the second stage of reduction that, in the shown embodiment (Fig. 6), are three satellites that plug on three corresponding insertion seats represented on the spider (11) and that are geared on the corresponding first rim (10) or epicycloidal stage rim that is fixed and mounted by means of the first disc (9) or rim-carrier disc, which is screwed on the box (7) of the gear-reducing device (50). The first rim (10) is fixed to the first disc (9) or rim-carrier disc by means of (Fig. 6, Fig. 7, Fig. 8) a fixing ring (8). The satellites (12) receive the motion by means of a transmission (14) which is a single body consisting of and integrating the second pinion (30) or pinion of the epicycloidal stage and the second rim (28) or rim of the first reduction stage. The second toothed rim (28) is directly geared on the first pinion (29) or pinion of the first reduction stage, which, as explained above, is situated directly on the shaft of the motor (24) and is supported in correspondence of the cover (16) by means of a third bearing (17) or first stage pinion bearing. The optimal solution is that the first pinion (29) is obtained directly on the shaft of the motor (24) by means of mechanical work, it is however clear that less preferable solutions could provide that the first pinion (29) is bushed and keyed at the end of the motor, thus making it interchangeable.

All the gears of the gear-reducing device (50) are incorporated in the first chamber (41) or chamber of the gear-reducing device. By means of a connecting channel (45), the first chamber (41) is in flow communication (Fig. 1) with a second chamber (42) working as an additional lubricant container integrated in the fusion of the cover (16) of the casing (34) of the gear-motor constituting the container that, together with the box (7) contains both the motor (24) and the gear-reducing device (50).

The motor (24), in correspondence of the side opposite to the one on which the interface between motor (24) and gear-reducing device (50) is located, is closed (Fig. 1) by a head (35) or closure head that simplifies the access to the motor (24) for inspection, cleaning or maintenance purposes.

As explained above, the casing (34), consisting of cover (16) and box (7), constitutes the container containing both the motor (24) and the gear-reducing device (50) also allowing full access to the gear-motor in that, by dismantling the casing (34) in its two constituent parts, the gear-motor opens very easily in two parts showing the gear-reducing device (50) on one side and the motor (24) on the other sideConsequently, access to the gear-motor is particularly simple and complete in correspondence with all its components with key advantages in terms of supervision and maintenance simplicity.

With respect to the prior art techniques, the external brake lever (26) for the mechanical operation of the brake does not act centrally on the axis of the gear-motor (51) in correspondence of the head (35) of the motor (24), but the external brake lever (26) for the mechanical operation of the brake (49) acts (Fig. 1, Fig. 2, Fig. 3, Fig. 4, Fig. 6) in eccentric position in correspondence with a radial end of the gear-motor (51). Furthermore, the friction disc or second disc (20) of the brake is placed in an intermediate position between the gear-reducing device (50) and the motor (24) and is connected to the shaft of the motor, namely to the first pinion (29), in proximity of the coupling with the second rim (28) of the transmission (14) of the second reduction stage. This positioning of the external brake lever (26) and the friction disc or second disc (20) of the brake allows freeing the head (35) of the motor from any operating element. Advantageously, moreover, thanks also to the use of a high-speed motor (24), for example a motor with maximum speed of around 8000 to 12000 RPM, the motor (24) is highly compact.

The characteristics and inventive technical solutions related to the use of a high-speed motor (24), to the arrangement of the braking system (49) in an intermediate position between the motor (24) and the reducer (50), to the use of a single closure casing (34) of the motor (24) and reducer (50) assembly, in addition to the above-mentioned advantages in terms of compactness and lightness of the gear-motor (51) in general together, also allows the housing (Fig. 1) of the inverter (32) controlling the motor (24) directly in correspondence of the closing head (35) of the motor (24). This solution would not be possible in the systems of the prior art since the overall encumbrance of the motor and the gear-reducing device would be too high and the addition of the inverter on the closure head (35) of the motor (24) would imply an additional encumbrance increase that would make the installation of the gear-motor and the inverter highly difficult. On the contrary, the inventive solution allows, with an even smaller encumbrance than the one common in the prior art, to arrange the inverter (32) controlling the motor (24) directly in correspondence of the closure head (35) of the motor (24) in order to further facilitate both installation on the electric-traction vehicle, and maintenance operations. The advantages that can be obtained with this configuration are important because the length of the power cables that run from the motor control inverter (32) to the motor (24) itself is considerably reduced with important advantages in terms of installation and maintenance simplicity, immunity to electrical interference, reduction of emitted electrical interference. Moreover, overall installation costs are also reduced because it is sufficient to connect the feeding cables to the inverter by means of the feeding connectors (31) and the control cable by means of the data line connector (33).

All this involves important benefits and obtains a gear-motor (51) assembly with compact, solid, cost-effective, and light integrated inverter (32), with benefits also in terms of overall consumption of the controlled electric-traction vehicle.

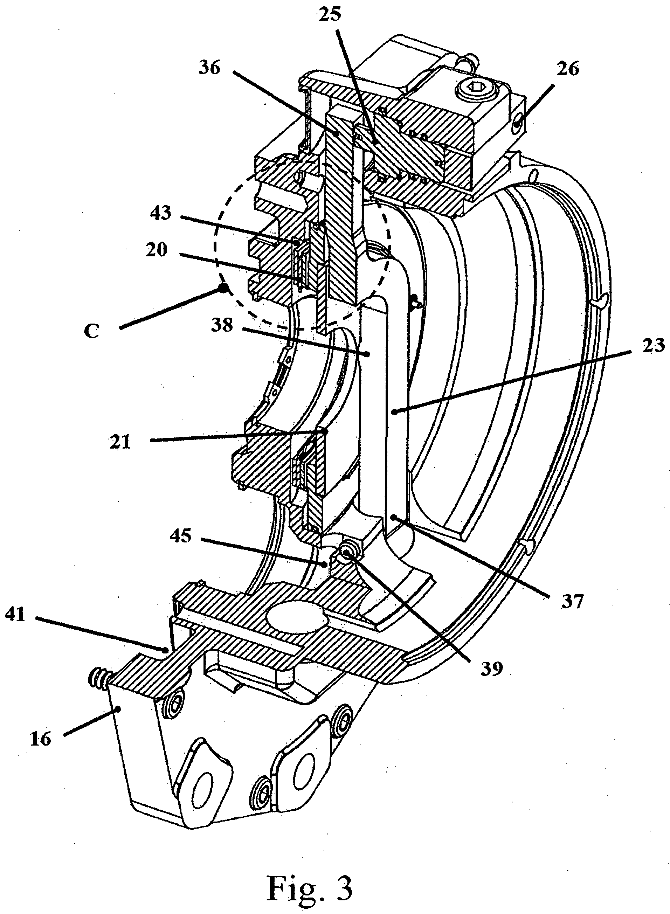

The braking system (49) consists of the friction disc (20) or second disc, the action of which is controlled (Fig. 1, Fig. 2, Fig. 3, Fig. 4) by an internal brake lever (23) which is placed inside the gear-motor (51) in an intermediate position between the motor (24) and the gear-reducing device (50), within a third chamber (43) constituting the disc brake chamber. The internal brake lever (23) is hinged (Fig. 1, Fig. 3) in correspondence of a first end (36) on the fulcrum point (39) and is controlled in a pushing action in correspondence of a second end (37) opposite to the first end (36) with respect to the longitudinal development of the internal brake lever (23) in general. The pushing action applied to the internal brake lever (23) involves (Fig. 3) the application of a pushing force on the force application point (38) which is approximately in an intermediate position between the first end (36) and the second end (37) of the internal brake lever (23). The pushing action applied by the internal brake lever (23) in correspondence of the force application point (38) causes (Fig. 5) the progress of the third disc (21) or pressure disc with the clamping of the friction disc (20) between this third disc (21) or pressure disc and the counter disc (19). The third disc (21) or pressure disc is supported by means of a second flange (22) or pressure disc supporting flange fixed on the cover (16) in correspondence of the cover side (16) on which the motor (24) is engaged, namely on the opposite side of the cover (16) with respect to the fixing side of the box (7) housing the gear-reducing device (50). Consequently, the braking system (49) consists of an oil-immersed disc brake with hydraulic activation and a mechanical lever. An elastic means (40), being in the shown embodiment is a spring placed between the cover (16) and the internal brake lever (23), exerts its reaction force by pushing the internal brake lever, (23) in the opposite direction with respect to the pushing direction exerted by the piston (25) to bring the braking system (49) back in its non-braking condition.

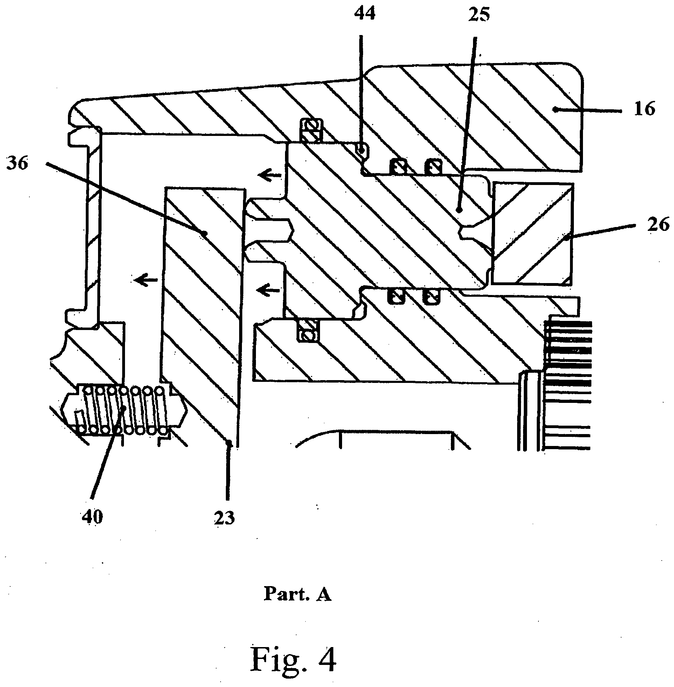

The hydraulic activation occurs (Fig. 4) by injecting oil in an injection chamber (44) by means (Fig. 6) of a connection (46) placed on the cover (16). The oil injection in the injection chamber (44) involves the pushing of a piston (25) exerting the necessary pushing force in correspondence of the second end (37) of the internal brake lever (23).

Alternatively, the piston (25) can be brought in pushing condition even by acting on an external brake lever (26) which exerts its own action directly on the piston (25) for the control of the braking action, thus performing a mechanical drive.

Advantageously, the use of a high-speed motor, indicatively 8000 to 12000 RPM, allows the reduction, down to almost a half, of the input maximum torque to the transmission, allowing the use of smaller gears. Consequently higher reduction ratios can be used. Approximately, while the prior art required the use of gear-reducing devices with a reduction ratio of about 20/30, the inventive system allows the use of a reduction ratio of about 50/60.

Advantageously the availability of a particularly compact gear-motor assembly (51) with integrated inverter (32) also allows having configurations of electric-traction vehicles with a complete group for each traction wheel allowing the obtainment of single controls on each of the driving wheels, each equipped with its own gear-motor (51) with integrated inverter (32). Alternatively, the inventive solution can be also applied in correspondence with a single traction wheel, for example, but without limitation within the aim of the present invention, in case of three-wheel electric-traction vehicles. Without limitation within the aim of the present invention, examples of electric-traction vehicles on which the gear-motor (51) with integrated inverter (32) according to the present invention can be applied are work vehicles, tractors, forklift trucks.

The hub (1) of the wheel (27) is supported (Fig. 6, Fig. 7, Fig. 8) within the box (7) of the gear-motor (51) by means of a pair of first bearings (2) with interposed spacer (3). Possible adjusting shims (4) interposed between the first bearings (2) and the spacer (3) further allow the correction and adjustment of the hub (1) fixing. In less preferred solutions of the present invention, the hub (1) of the wheel (27) can also be supported by a single bearing.

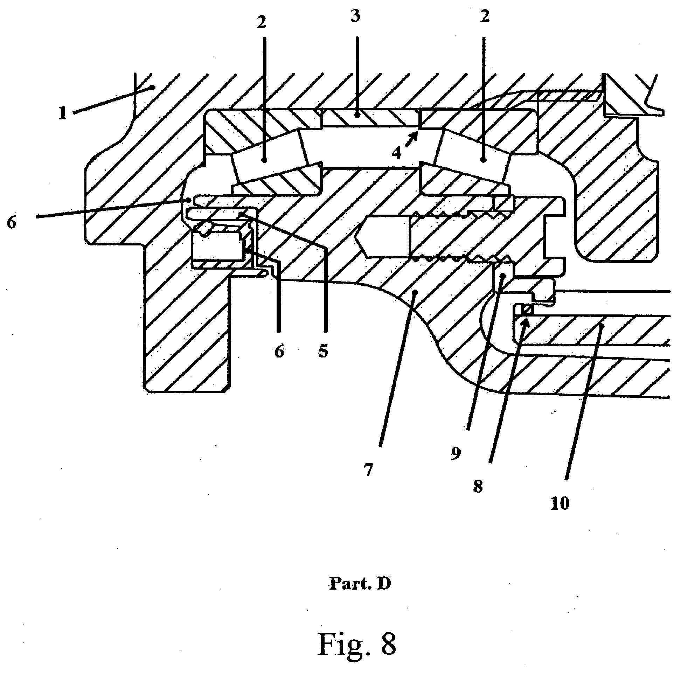

The existing spans (47) (Fig. 6, Fig. 8) between the hub (1) and the box (7) are closed by means of a gasket (6) coupling with a corresponding gasket track (5) in order to perform the previously explained sealing condition, with the further advantage of avoiding any possible dirt infiltration.

Basically, the present invention relates to a gear-motor (51) with integrated brake (49) for direct transmission to the motor wheel (27) of an electric-traction vehicle in which the traction motor (24) is integrated into a gear-reducing device (50) connectable to the driving wheel (27) of the electrical traction vehicle in correspondence of a hub (1), in which the gear-reducing device (50) is housed into a structural supporting box (7) connectable to the electric-traction vehicle by means of fixing holes (52). The traction motor (24) has a support casing that can be fixed as a cover (16) to the box (7), the box (7) and the cover (16) constituting a single structural support casing (34) of the gear-motor (51), the cover (16) covering and closing the gear-reducing device (50) within the box (7), the opening of the cover (16) allowing free access to the gear-reducing device (50) on one side and to the motor (51) on the opposite side. The traction motor (24) is a compact high speed motor (24) with maximum speed of about 8000 to 12000 RPM, whose transmission shaft is coupled in correspondence of the first pinion of the gear-reducing device (50) or is integral with the first pinion of the gear-reducing device (50). Preferably the driving and control inverter (32) of the motor (24) is housed in correspondence with the closing head (35) of the motor (24), the driving and control wiring between the inverter (32) and the motor (24) having a minimum length given by the small distance between the motor (24) and the inverter (32) housed in correspondence of the closing head (35) of the motor (24), the driving and control wiring of the gear-motor (51) by means of controls coming from the electrical traction vehicle comprising power supply cables of the inverter (32) connected to feeding connectors (31) and a control cable connected to a data line connector (33) of the inverter (32).

The gear-reducing device (50) is preferably a two-stage gear-reducing device of which a first stage is coupled to the shaft of the motor (24) and a second stage is an epicycloidal stage coupled to the hub (1).

Finally, the present invention also relates to an electrical traction vehicle including at least one gear-motor (51) according to the present invention for direct transmission to the motor wheel (27) of the electric-traction vehicle.

The description of the present invention, in its preferred embodiment, makes reference to the enclosed figures, it is however obvious that many possible modifications, changes and variants will be immediately clear to those skilled in the art in light of the previous description. Therefore, it should be noted that the previous description is not limitative of the invention, but includes all modifications, changes and variants in accordance with the appended claims.

### Employed nomenclature

The following nomenclature has been used with reference to the reference numbers indicated in the enclosed figures:
1. Wheel hub
2. First bearing or bearing of the wheel hub
3. Spacer
4. Adjusting shim
5. Track for the gasket
6. Gasket
7. Box
8. Locking ring of the rim
9. First disc or rim-carrier disc
10. First rim or rim of the epicycloidal stage
11. Spider
12. Satellite
13. Locking ring
14. Transmission
15. Second bearing or transmission bearing
16. Supporting casing or cover
17. Third bearing or bearing of the first stage pinion
18. First flange or dragging flange
19. Counter disc
20. Second disc or friction disc
21. Third disc or pressure disc
22. Second flange or pressure disc supporting flange
23. Internal brake lever
24. Motor
25. Piston
26. External brake lever
27. Wheel
28. Second rim or rim of the first reduction stage
29. First pinion or pinion of the first reduction stage
30. Second pinion or pinion of the epicycloidal stage
31. Inverter feeding connector
32. Inverter
33. Inverter data line connector
34. Casing
35. Head or motor closing head
36. First end
37. Second end
38. Force application point
39. Fulcrum
40. Elastic means
41. First chamber or chamber of the gear-reducing device
42. Second chamber or additional container integrated in the fusion
43. Third chamber or chamber of the disc brake
44. Injection chamber
45. Connecting channel
46. Connection
47. Span
48. Sliding and support means
49. Brake or braking system
50. Gear-reducing device
51. Gear-motor
52. Fixing holes

## Claims

1. Gear-motor (51) with integrated brake (49) for direct drive to the driving-wheel (27) of an electric-traction vehicle where a traction motor (24) is integrated with a gear-reducing device (50) connectable to said driving-wheel (27) of said electric-traction vehicle in correspondence with a hub (1), where said gear-reducing device (50) is housed into a structural supporting box (7) connectable to said electric-traction vehicle by means of fixing holes (52), said traction motor (24) having its own supporting shell which is fixed as a cover (16) to said box (7), said box (7) and said cover (16) constituting a single structural supporting casing (34) of said gear-motor (51), said cover (16) covering and encompassing said gear-reducing device (50) within said box (7), the opening of said cover (16) allowing the free access to said gear-reducing device (50) on one side and to said motor (51) at the opposite side **characterised in that** said traction motor (24) is a motor (24) whose transmission shaft is coupled in correspondence of a first pinion of said gear-reducing device (50) or it is integral with said first pinion of said gear-reducing device (50) and further **characterised in that** it includes an inverter (32) intended to control said motor (24), said inverter (32) being housed at the closing head (35) of said motor (24), the driving and control wiring between said inverter (32) and said motor (24) having a minimum length which is given by the small distance between said motor (24) and said inverter (32) which is housed at the closing head (35) of said motor (24), the driving and control wiring of said gear-motor (51) by means of controls coming from said electric-traction vehicle comprising power supply cables for said inverter (32) connected to feeding connectors (31) and a control cable connected to a data line connector (33) of said inverter (32).

2. Gear-motor (51) according to the previous claim **characterised in that** said traction motor (24) is a motor (24) with maximum speed between 8000 and 12000 RPM.

3. Gear-motor (51) according to any of the previous claims **characterised in that** said brake (49) is located in between said traction motor (24) and said gear-reducing device (50).

4. Gear-motor (51) according to any of the previous claims **characterised in that** said brake (49) consists of an oil-immersed disc brake with hydraulic activation and with activation by means of a mechanical lever.

5. Gear-motor (51) according to any of the previous claims **characterised in that** said brake (49) includes a friction disc (20) whose braking action is controlled by an internal brake lever (23) which is internally located with respect to said gear-motor (51) in between said motor (24) and said gear-reducing device (50), within a third chamber (43) constituting the chamber of said brake, said internal brake lever (23) being hinged in correspondence of a first end (36) on a fulcrum point (39) and being controlled in a pushing action in correspondence of a second end (37) which is an opposite end with respect to said first end (36) with respect to the longitudinal development of said internal brake lever (23).

6. Gear-motor (51) according to the previous claim **characterised in that** the pushing action applied to said internal brake lever (23) is applied by means of a hydraulic activation piston (25), the hydraulic activation occurring by injecting oil in an injection chamber (44) by means of a connection (46) which is placed on said cover (16), the oil injection into said injection chamber (44) involving the pushing of said piston (25) which applies a corresponding pushing force in correspondence with said second end (37) of said internal brake lever (23).

7. Gear-motor (51) according to any of the previous claims 5 to 6 **characterised in that** the pushing action applied to said internal brake lever (23) is applied by means of an external brake lever (26) which applies its action in order to control the braking action by means of a mechanical control.

8. Gear-motor (51) according to the previous claim and according to claim 6 **characterised in that** said external brake lever (26) applies its control action of the braking action on said internal brake lever (23) by means of said piston (25), the pushing force applied by said external brake lever (26) being applied on the opposite end of said piston (25) with respect to the end of said piston (25) which pushes on said internal brake lever (23), said piston (25) transferring said force which is applied on said external brake lever (26) to said internal brake lever (23) controlling the braking action.

9. Gear-motor (51) according to any of the previous claims 5 to 8 **characterised in that** the pushing action applied to said internal brake lever (23) involves the application of a pushing force on an application point of the force (38) which is essentially in between said first end (36) and said second end (37) of said internal brake lever (23), the pushing action applied by said internal brake lever (23) in correspondence with said application point of the force (38) causing the advancement of a third disc (21) or pressure disc causing the clamping of said friction disc (20) between said third disc (21) or pressure disc and a counter disc (19).

10. Gear-motor (51) according to the previous claim **characterised in that** said third disc (21) or pressure disc is supported by means of a second flange (22) or support flange of the pressure disc which is fixed on said cover (16) in correspondence of the side of said cover (16) on which said motor (24) engages, namely on the opposite side of said cover (16) with respect to the side intended to be fixed on said box (7) for housing said gear-reducing device (50).

11. Gear-motor (51) according to any of the previous claims 5 to 10 **characterised in that** said fulcrum point (39) of said internal brake lever (23) is located on said cover (16), said cover (16) comprising an insertion seat for an elastic means (40) applying a reaction force pushing said internal brake lever (23) in the opposite direction with respect to the pushing direction applied by said piston (25).

12. Gear-motor (51) according to any of the previous claims 3 to 10 **characterised in that** the braking action of said brake (49) is applied in correspondence with said shaft of said motor (24) by means of a dragging flange (18) which is radially inwardly engaged to said shaft of said motor (24) or on said first pinion of said gear-reducing device (50).

13. Gear-motor (51) according to the previous claim and according to claim 5 **characterised in that** said dragging flange (18) is radially outwardly engaged to said friction disc (20), said dragging flange (18) putting in rotation said friction disc (20) at a rotational speed corresponding to the rotation speed of said shaft of said motor (24) or of said first pinion of said gear-reducing device (50).

14. Gear-motor (51) according to any of the previous claims **characterised in that** said first pinion (29) or pinion of the first stage of reduction of said gear-reducing device (50) is directly obtained on said shaft of said motor (24), said shaft of said motor (24) being mechanically machined to obtain the connection gear of said first pinion (29).

15. Gear-motor (51) according to any of the previous claims 1 to 13 **characterised in that** said first pinion (29) is coupled to said shaft of said motor (24) by means of a buckle and by keying in correspondence with the end of said shaft of said motor (24).

16. Gear-motor (51) according to any of the previous claims **characterised in that** said gear-reducing device (50) is a gear-reducing device with two stages of which a first stage is coupled with said shaft of said motor (24) and a second stage is an epicycloidal stage coupled to said hub (1).

17. Gear-motor (51) according to the previous claim **characterised in that** said hub (1) is integrated and integral with the spider (11) of a second stage of reduction of said gear-reducing device (50), said spider (11) being fixed to said hub (1) by means of a locking ring (13) which is screwed on a corresponding threaded portion protruding from said hub (1), internally and axially with respect to said protrusion an insertion seat being obtained for sliding and supporting means (48) of the end of a second pinion (30) of a transmission (14) of the gear-motor, said transmission (14) being supported at the opposite side with respect to the side where said second pinion (30) is obtained, by means of a second bearing (15) or bearing of the transmission which is applied on said cover (16), said transmission (14) being rotationally supported by said cover (16) and by said hub (1).

18. Gear-motor (51) according to the previous claim **characterised in that** said spider (11) receives the motion by means of satellites (12) which plug on corresponding insertion seats of said spider (11) and which are engaged on a first rim (10) or rim of the epicycloidal stage which is fixed and which is mounted by means of a first disc (9) or rim-carrier disc, which is screwed on said box (7) of said gear-reducing device (50).

19. Gear-motor (51) according to the previous claim **characterised in that** said spider (11) includes three insertion seats for three corresponding satellites (12).

20. Gear-motor (51) according to any of the previous claims 18 to 19 **characterised in that** said satellites (12) receive the motion by means of said transmission (14) which is a single body consisting of and integrating said second pinion (30) or pinion of the epicycloidal stage and a second rim (28) or rim of the first reduction stage, said second rim (28) being a toothed rim which is directly engaged to said first pinion of said gear-reducing device (50).

21. Gear-motor (51) according to any of the previous claims **characterised in that** the gears of said gear-reducing device (50) are housed in a first chamber (41) or chamber of the gear-reducing device which is obtained within said box (7), and **characterised in that** said motor (24) is housed in a second chamber (42) obtained within said cover (16), said first chamber being in flow communication with said second chamber (42), by means of a connecting channel (45), said second chamber (42) constituting an additional container of the lubricant of said gear-reducing device (50).

22. Electric-traction vehicle **characterised in that** it includes at least one gear-motor (51) according to any of the previous claims for direct drive to said driving-wheel (27) of said electric-traction vehicle.

## Patentansprüche

1. Getriebemotor (51) mit integrierter Bremse (49) für Direktantrieb des Antriebsrads (27) eines Fahrzeugs mit Elektroantrieb, wobei ein Antriebsmotor (24) mit einer Getriebevorrichtung (50) integriert ist, die an besagtem Antriebsrad (27) des Fahrzeugs mit Elektroantrieb über eine Nabe (1) verbindbar ist, wobei die Getriebevorrichtung (50) in einem strukturellen Stützkasten (7) untergebracht ist, der mit dem Fahrzeug mit Elektroantrieb mittels Befestigungslöchern (52) verbindbar ist,
wobei der Antriebsmotor (24) seine eigene Tragschale hat, die als Deckel (16) an dem Kasten (7) befestigt ist, wobei Kasten (7) und Deckel (16) ein einziges strukturelles Traggehäuse (34) des Getriebemotors (51) bilden, wobei der Deckel (16) die Getriebevorrichtung (50) in dem Kasten (7) bedeckt und enthält, wobei die Öffnung des Deckels (16) den freien Zugriff auf die Getriebevorrichtung (50) an einer Seite gestattet und auf den Motor (51) an der gegenüberliegenden Seite, **gekennzeichnet dadurch, dass** der Antriebsmotor (24) ein Motor (24) ist, dessen Antriebswelle mit einem ersten Ritzel der Getriebevorrichtung (50) gekoppelt oder einstückig mit dem ersten Ritzel der Getriebevorrichtung (50) ist,
und weiter **gekennzeichnet dadurch, dass** er einen Inverter (32) umfasst, um den Motor (24) zu steuern, wobei der Inverter (32) bei dem Schließkopf (35) des Motors (24) untergebracht ist, wobei die Antriebs- und Steuerverdrahtung zwischen Inverter (32) und Motor (24) eine Mindestlänge aufweist, die durch den geringen Abstand zwischen Motor (24) und Inverter (32) gegeben ist, der bei dem Schließkopf (35) des Motors (24) untergebracht ist, wobei die Antriebs- und Steuerverdrahtung des Getriebemotors (51) mittels Steuerungselementen, die von dem Fahrzeug mit Elektroantrieb kommen, Stromversorgungskabel für den Inverter (32) umfasst, verbunden mit Speisemodulen (31), und ein Steuerkabel, das mit einem Datenleitungsanschluss (33) des Inverters (32) verbunden ist.

2. Getriebemotor (51) nach dem vorherigen Anspruch, **gekennzeichnet dadurch, dass** der Antriebsmotor (24) ein Motor (24) mit Höchstgeschwindigkeit zwischen 8000 und 12000 U/Min ist.

3. Getriebemotor (51) nach einem beliebigen der vorherigen Patentansprüche, **gekennzeichnet dadurch, dass** die Bremse (49) sich zwischen Antriebsmotor (24) und Getriebevorrichtung (50) befindet.

4. Getriebemotor (51) nach einem beliebigen der vorherigen Patentansprüche, **gekennzeichnet dadurch, dass** die Bremse (49) aus einer ölgekapselten Scheibenbremse mit hydraulischer Aktivierung und mit Aktivierung mittels eines mechanischen Hebels besteht.

5. Getriebemotor (51) nach einem beliebigen der vorherigen Patentansprüche, **gekennzeichnet dadurch, dass** die Bremse (49) eine Reibscheibe (20) umfasst, deren Bremswirkung von einem Innenbremshebel (23) gesteuert wird, der innen in Bezug auf den Getriebemotor (51) liegt, zwischen Motor (24) und Getriebevorrichtung (50), in einer dritten Kammer (43), die die Kammer der Bremse bildet, wobei der Innenbremshebel (23) an einem ersten Ende (36) mit einem Hebelpunkt (39) gelenkig verbunden ist und in einer Schiebewirkung an einem zweiten Ende (37) gesteuert wird, das ein gegenüberliegendes Ende in Bezug auf das erste Ende (36) in Bezug auf die Längsausdehnung des Innenbremshebels (23) ist.

6. Getriebemotor (51) nach dem vorherigen Anspruch, **gekennzeichnet dadurch, dass** die Schiebewirkung, die auf den Innenbremshebel (23) aufgebracht wird, mittels eines hydraulischen Aktivierungskolbens (25) aufgebracht wird, wobei die hydraulische Aktivierung durch Einspritzen von Öl in eine Einspritzkammer (44) mittels einer Verbindung (46) erfolgt, die auf dem Deckel (16) gelegen ist, wobei die Öleinspritzung in die Einspritzkammer (44) das Schieben des Kolbens (25) umfasst, der eine entsprechende Schubkraft in Verbindung mit dem zweiten Ende (37) des Innenbremshebels (23) aufbringt.

7. Getriebemotor (51) nach einem beliebigen der vorherigen Patentansprüche 5 bis 6, **gekennzeichnet dadurch, dass** die Schiebewirkung, die auf den Innenbremshebel (23) aufgebracht wird, mittels eines äußeren Bremshebels (26) aufgebracht wird, um das Bremsen mittels einer mechanischen Steuerung zu kontrollieren.

8. Getriebemotor (51) nach dem vorherigen Anspruch und nach Anspruch 6, **gekennzeichnet dadurch, dass** der äußere Bremshebel (26) seine Steuerung des Bremsens auf dem Innenbremshebel (23) mittels des Kolbens (25) durchführt, wobei die Schubkraft, die von dem äußeren Bremshebel (26) aufgebracht wird, auf das gegenüberliegende Ende des Kolbens (25) in Bezug auf das Ende des Kolbens (25) aufgebracht wird, der den Innenbremshebel (23) schiebt, wobei der Kolben (25) die Kraft, die auf den äußeren Bremshebel (26) aufgebracht wird, auf den Innenbremshebel (23) überträgt, der das Bremsen steuert.

9. Getriebemotor (51) nach einem beliebigen der vorherigen Patentansprüche 5 bis 8, **gekennzeichnet dadurch, dass** die Schiebewirkung, die auf den Innenbremshebel (23) aufgebracht wird, die Aufbringung einer Schubkraft auf einen Kraftaufbringungspunkt (38) umfasst, der im wesentlichen zwischen dem ersten Ende (36) und dem zweiten Ende (37) des Innenbremshebels (23) liegt, wobei die Schiebewirkung, die von dem inneren Bremshebel (23) am Kraftaufbringungspunkt (38) aufgebracht wird, zum Vorschub einer dritten Scheibe (21) oder Druckscheibe führt, die die Klemmung der Reibscheibe (20) zwischen der dritten Scheibe (21) oder Druckscheibe und einer Gegenscheibe (19) bewirkt.

10. Getriebemotor (51) nach dem vorherigen Anspruch, **gekennzeichnet dadurch, dass** die dritte Scheibe (21) oder Druckscheibe mittels eines zweiten Flanschs (22) oder Trägerflanschs der Druckscheibe gestützt wird, der auf dem Deckel (16) an der Seite des Deckels (16) befestigt ist, an der der Motor (24) eingreift, und zwar auf der gegenüberliegenden Seite des Deckels (16) in Bezug auf die Seite, die auf dem Kasten (7) befestigt werden soll, um die Getriebevorrichtung (50) aufzunehmen.

11. Getriebemotor (51) nach einem beliebigen der vorherigen Patentansprüche 5 bis 10, **gekennzeichnet dadurch, dass** der Hebelpunkt (39) des Innenbremshebels (23) sich auf dem Deckel (16) befindet, wobei der Deckel (16) eine Einsetzaufnahme für ein elastisches Mittel (40) aufweist, das eine Reaktionskraft erzeugt, die den Innenbremshebel (23) in die entgegengesetzte Richtung in Bezug auf die Schubrichtung schiebt, die von dem Kolben (25) aufgebracht wird.

12. Getriebemotor (51) nach einem beliebigen der vorherigen Patentansprüche 3 bis 10, **gekennzeichnet dadurch, dass** das Bremsen der Bremse (49) in Verbindung mit besagter Welle des Motors (24) mittels eines Mitnehmerflanschs (18) erfolgt, der radial nach innen in die Welle des Motors (24) greift, oder in das erste Ritzel der Getriebevorrichtung (50).

13. Getriebemotor (51) nach dem vorherigen Anspruch und nach Anspruch 5, **gekennzeichnet dadurch, dass** der Mitnehmerflansch (18) radial außen in die Reibscheibe (20) greift, wobei der Mitnehmerflansch (18) die Reibscheibe (20) in Drehung versetzt, mit einer Drehzahl entsprechend der Drehzahl der Welle des Motors (24) oder des ersten Ritzels der Getriebevorrichtung (50).

14. Getriebemotor (51) nach einem beliebigen der vorherigen Patentansprüche, **gekennzeichnet dadurch, dass** das erste Ritzel (29) oder das Ritzel der ersten Übersetzungsstufe der Getriebevorrichtung (50) direkt auf der Welle des Motors (24) erhalten wird, wobei die Welle des Motors (24) mechanisch bearbeitet ist, um das Verbindungsgetriebe des ersten Ritzels (29) zu erhalten.

15. Getriebemotor (51) nach einem beliebigen der vorherigen Patentansprüche 1 bis 13, **gekennzeichnet dadurch, dass** das erste Ritzel (29) mit der Welle des Motors (24) mittels eines Verschlusses verbunden ist und mittels Keilverbindung an dem Ende der Welle des Motors (24).

16. Getriebemotor (51) nach einem beliebigen der vorherigen Patentansprüche, **gekennzeichnet dadurch, dass** die Getriebevorrichtung (50) eine Getriebevorrichtung mit zwei Stufen ist, von denen eine erste Stufe mit der Welle des Motors (24) gekoppelt ist und eine zweite Stufe eine epizykloidale Stufe ist, die mit der Nabe (1) gekoppelt ist.

17. Getriebemotor (51) nach dem vorherigen Anspruch, **gekennzeichnet dadurch, dass** die Nabe (1) integriert und einstückig mit dem Planetenradträger (11) einer zweiten Übersetzungsstufe der Getriebevorrichtung (50) ist, wobei der Planetenradträger (11) an der Nabe (1) mittels eines Klemmrings (13) befestigt ist, der auf ein entsprechendes Gewindeteil geschraubt ist, das von der Nabe (1) vorspringt,
wobei innen und axial in Bezug auf den Vorsprung eine Einsetzaufnahme für Gleit- und Stützmittel (48) des Endes eines zweiten Ritzels (30) eines Getriebes (14) des Getriebemotors erhalten wird, wobei das Getriebe (14) an der gegenüberliegenden Seite in Bezug auf die Seite gestützt wird, an der das zweite Ritzel (30) erhalten wird, mittels eines zweiten Lagers (15) oder Lagers des Getriebes, das auf dem Deckel (16) angebracht ist, wobei das Getriebe (14) rotierend von dem Deckel (16) und von der Nabe (1) gestützt wird.

18. Getriebemotor (51) nach dem vorherigen Anspruch, **gekennzeichnet dadurch, dass** der Planetenradträger (11) die Bewegung mittels Planetenräder (12) aufnimmt, die in entsprechende Einfügungssitze des Planetenradträgers (11) eingreifen und die in einen ersten Radkranz (10) oder Radkranz der epizykloidalen Stufe eingreifen, der befestigt ist und mittels einer ersten Scheibe (9) oder Radkranzträgerscheibe montiert ist, die auf den Kasten (7) der Getriebevorrichtung (50) geschraubt ist.

19. Getriebemotor (51) nach dem vorherigen Anspruch, **gekennzeichnet dadurch, dass** der Planetenradträger (11) drei Einfügungssitze für drei entsprechende Planetenräder (12) umfasst.

20. Getriebemotor (51) nach einem beliebigen der vorherigen Patentansprüche 18 bis 19, **gekennzeichnet dadurch, dass** die Planetenräder (12) die Bewegung mittels besagten Getriebes (14) aufnehmen, das ein einzelner Körper ist, der aus dem zweiten Ritzel (30) oder Ritzel der epizykloidalen Stufe und einem zweiten Radkranz (28) oder Radkranz der ersten Übersetzungsstufe besteht und diese integriert, wobei der zweite Radkranz (28) ein gezähnter Radkranz ist, der direkt in das ersten Ritzel der Getriebevorrichtung (50) einrastet.

21. Getriebemotor (51) nach einem beliebigen der vorherigen Patentansprüche, **gekennzeichnet dadurch, dass** die Getriebe der Getriebevorrichtung (50) in einer ersten Kammer (41) oder Kammer der Getriebevorrichtung untergebracht sind, die in dem Kasten (7) erhalten ist, und **gekennzeichnet dadurch, dass** der Motor (24) in einer zweiten Kammer (42), die in dem Deckel (16) erhalten ist, untergebracht ist, wobei die erste Kammer in Strömungsverbindung mit der zweiten Kammer (42) ist, mittels eines verbindenden Kanals (45), wobei die zweite Kammer (42) einen zusätzlichen Behälter für den Schmierstoff für die Getriebevorrichtung (50) bildet.

22. Fahrzeug mit Elektroantrieb, **gekennzeichnet dadurch, dass** es mindestens einen Getriebemotor (51) nach einem beliebigen der vorherigen Patentansprüche für den Direktantrieb des Antriebsrads (27) des Fahrzeugs mit Elektroantrieb umfasst.

## Revendications

1. Motoréducteur (51) avec frein intégré (49) pour une transmission directe à la roue motrice (27) d'un véhicule à traction électrique où un moteur de traction (24) est intégré avec un réducteur (50) connectable à ladite roue motrice (27) dudit véhicule à traction électrique à un moyeu (1), où ledit réducteur (50) est placé dans une boîte de support structurel (7) connectable audit véhicule à traction électrique au moyen de trous de fixation (52), ledit moteur de traction (24) ayant son propre enveloppe de support qui est fixé comme couvercle (16) à ladite boîte (7), ladite boîte (7) et ledit couvercle (16) constituant un boîtier de support structurel unique (34) dudit motoréducteur (51), ledit couvercle (16) couvrant et englobant ledit réducteur (50) dans ladite boîte (7), l'ouverture dudit couvercle (16) permettant le libre accès audit réducteur (50) d'un côté et audit moteur (51) au côté opposé, **caractérisé en ce que** ledit moteur de traction (24) est un moteur (24) dont l'arbre de transmission est accouplé à un premier pignon dudit réducteur (50) ou il est solidaire avec ledit premier pignon dudit réducteur (50), et ultérieurement **caractérisé en ce qu'**il comprend un inverseur (32) destiné à contrôler ledit moteur (24), ledit inverseur (32) étant placé à la tête de fermeture (35) dudit moteur (24), le câblage de commande et de contrôle entre ledit inverseur (32) et ledit moteur (24) ayant une longueur minimale qui est déterminée par la petite distance entre ledit moteur (24) et ledit inverseur (32) qui est placé à la tête de fermeture (35) dudit moteur (24), le câblage de commande et de contrôle dudit motoréducteur (51) au moyen de commandes provenant dudit véhicule à traction électrique comprenant des câbles d'alimentation pour ledit inverseur (32) connectés à des connecteurs d'alimentation (31), et un câble de contrôle connecté à un connecteur de ligne de données (33) dudit inverseur (32).

2. Motoréducteur (51) selon la revendication précédente **caractérisé en ce que** ledit moteur de traction (24) est un moteur (24) avec une vitesse maximale entre 8000 et 12000 t/mn.

3. Motoréducteur (51) selon l'une quelconque des revendications précédentes **caractérisé en ce que** ledit frein (49) est situé entre ledit moteur de traction (24) et ledit réducteur (50).

4. Motoréducteur (51) selon l'une quelconque des revendications précédentes **caractérisé en ce que** ledit frein (49) consiste en un frein à disque à bain d'huile avec activation hydraulique et avec activation au moyen d'un levier mécanique.

5. Motoréducteur (51) selon l'une quelconque des revendications précédentes **caractérisé en ce que** ledit frein (49) comprend un disque de friction (20), dont l'action de freinage est contrôlée par un levier de frein interne (23) qui est situé internement par rapport audit motoréducteur (51) entre ledit moteur (24) et ledit réducteur (50), dans une troisième chambre (43) constituant la chambre dudit frein, ledit levier de frein interne (23) étant articulé à une première extrémité (36) sur un point d'appui (39) et étant contrôlé dans une action de poussée à une deuxième extrémité (37) qui est une extrémité opposée par rapport à ladite première extrémité (36) par rapport au développement longitudinal dudit levier de frein interne (23).

6. Motoréducteur (51) selon la revendication précédente **caractérisé en ce que** l'action de poussée appliquée audit levier de frein interne (23) est appliquée au moyen d'un piston d'activation hydraulique (25), l'activation hydraulique ayant lieu par injection d'huile dans une chambre d'injection (44) au moyen d'une connexion (46) qui est placée sur ledit couvercle (16), l'injection d'huile dans ladite chambre d'injection (44) impliquant la poussée dudit piston (25) qui applique une correspondante force de poussée à ladite deuxième extrémité (37) dudit levier de frein interne (23).

7. Motoréducteur (51) selon l'une quelconque des revendications précédentes 5 à 6 **caractérisé en ce que** l'action de poussée appliquée audit levier de frein interne (23) est appliquée au moyen d'un levier de frein externe (26) qui applique son action afin de contrôler l'action de freinage au moyen d'une commande mécanique.

8. Motoréducteur (51) selon la revendication précédente et selon la revendication 6 **caractérisé en ce que** ledit levier de frein externe (26) applique son action de commande de l'action de freinage sur ledit levier de frein interne (23) au moyen dudit piston (25), la force de poussée appliquée par ledit levier de frein externe (26) étant appliquée sur l'extrémité opposée dudit piston (25) par rapport à l'extrémité dudit piston (25) qui pousse sur ledit levier de frein interne (23), ledit piston (25) transférant ladite force qui est appliquée sur ledit levier de frein externe (26) audit levier de frein interne (23) contrôlant l'action de freinage.

9. Motoréducteur (51) selon l'une quelconque des revendications précédentes 5 à 8 **caractérisé en ce que** l'action de poussée appliquée audit levier de frein interne (23) implique l'application d'une force de poussée sur un point d'application de la force (38) qui se trouve essentiellement entre ladite première extrémité (36) et ladite deuxième extrémité (37) dudit levier de frein interne (23), l'action de poussée appliquée par ledit levier de frein interne (23) audit point d'application de la force (38) causant l'avancement d'un troisième disque (21) ou disque de pression causant le serrage dudit disque de friction (20) entre ledit troisième disque (21) ou disque de pression et un contre-disque (19).

10. Motoréducteur (51) selon la revendication précédente **caractérisé en ce que** ledit troisième disque (21) ou disque de pression est supporté au moyen d'une deuxième bride (22) ou bride de support du disque de pression, qui est fixée sur ledit couvercle (16) au côté dudit couvercle (16) sur lequel ledit moteur (24) s'engage, c'est-à-dire du côté opposé dudit couvercle (16) par rapport au côté destiné à être fixé sur ladite boîte (7) pour y placer ledit réducteur (50).

11. Motoréducteur (51) selon l'une quelconque des revendications précédentes 5 à 10 **caractérisé en ce que** ledit point d'appui (39) dudit levier de frein interne (23) est situé sur ledit couvercle (16), ledit couvercle (16) comprenant un logement d'insertion pour un moyen élastique (40) appliquant une force de réaction qui pousse ledit levier de frein interne (23) dans la direction inverse par rapport à la direction de poussée appliquée par ledit piston (25).

12. Motoréducteur (51) selon l'une quelconque des revendications précédentes 3 à 10 **caractérisé en ce que** l'action de freinage dudit frein (49) est appliquée audit arbre dudit moteur (24) au moyen d'une bride d'entraînement (18) qui s'engage radialement vers l'intérieur audit arbre dudit moteur (24) ou sur ledit premier pignon dudit réducteur (50).

13. Motoréducteur (51) conformément à la revendication précédente et selon la revendication 5,
**caractérisé en ce que** ladite bride d'entraînement (18) s'engage radialement vers l'extérieur audit disque de friction (20), ladite bride d'entraînement (18) mettant en rotation ledit disque de friction (20) à une vitesse de rotation qui correspond à la vitesse de rotation dudit arbre dudit moteur (24) ou dudit premier pignon dudit réducteur (50).

14. Motoréducteur (51) selon l'une quelconque des revendications précédentes **caractérisé en ce que** ledit premier pignon (29) ou pignon du premier étage de réduction dudit réducteur (50) est directement obtenu sur ledit arbre dudit moteur (24), ledit arbre dudit moteur (24) étant usiné mécaniquement pour obtenir l'engrenage de connexion dudit premier pignon (29).

15. Motoréducteur (51) selon l'une quelconque des revendications précédentes 1 à 13 **caractérisé en ce que** ledit premier pignon (29) est accouplé audit arbre dudit moteur (24) au moyen d'une boucle et calage à l'extrémité dudit arbre dudit moteur (24).

16. Motoréducteur (51) selon l'une quelconque des revendications précédentes **caractérisé en ce que** ledit réducteur (50) est un réducteur avec deux étages dont un premier étage est accouplé avec ledit arbre dudit moteur (24) et un deuxième étage est un étage épicycloïdal accouplé audit moyeu (1).

17. Motoréducteur (51) selon la revendication précédente **caractérisé en ce que** ledit moyeu (1) est intégré et solidaire avec le porte-satellites (11) d'un deuxième étage de réduction dudit réducteur (50), ledit porte-satellites (11) étant fixé audit moyeu (1) au moyen d'un anneau de fermeture (13) qui est vissé sur une partie filetée correspondante saillant dudit moyeu (1), internement et axialement par rapport à ladite saillie un logement d'insertion étant obtenu pour des moyens coulissants et de support (48) de l'extrémité d'un deuxième pignon (30) d'une transmission (14) du motoréducteur, ladite transmission (14) étant supportée du côté opposé par rapport au côté où ledit deuxième pignon (30) est obtenu, au moyen d'un deuxième roulement (15) ou roulement de la transmission qui est appliqué sur ledit couvercle (16), ladite transmission (14) étant supportée en rotation par ledit couvercle (16) et par ledit moyeu (1).

18. Motoréducteur (51) conformément à la revendication précédente **caractérisé en ce que** ledit porte-satellites (11) reçoit le mouvement au moyen de satellites (12) qui s'insèrent dans des logements d'insertion correspondants dudit porte-satellites (11) et qui sont engagés sur une première jante (10) ou jante de l'étage épicycloïdal qui est fixée et qui est montée au moyen d'un premier disque (9) ou disque porte-jante, qui est vissé sur ladite boîte (7) dudit réducteur (50).

19. Motoréducteur (51) selon la revendication précédente **caractérisé en ce que** ledit porte-satellites (11) comprend trois logements d'insertion pour trois satellites correspondants (12).

20. Motoréducteur (51) selon l'une quelconque des revendications précédentes 18 à 19 **caractérisé en ce que** lesdits satellites (12) reçoivent le mouvement au moyen de ladite transmission (14) qui est un seul corps étant composé de, et intégrant, ledit deuxième pignon (30) ou pignon de l'étage épicycloïdal et une deuxième jante (28) ou jante de la première phase de réduction, ladite deuxième jante (28) étant une jante dentée qui s'engage directement audit premier pignon dudit réducteur (50).

21. Motoréducteur (51) selon l'une quelconque des revendications précédentes **caractérisé en ce que** les engrenages dudit réducteur (50) sont placés dans une première chambre (41) ou chambre du réducteur qui est obtenue dans ladite boîte (7), et **caractérisé en ce que** ledit moteur (24) est placé dans une deuxième chambre (42) obtenue dans ledit couvercle (16), ladite première chambre étant en communication de flux avec ladite deuxième chambre (42) au moyen d'un canal de connexion (45), ladite deuxième chambre (42) constituant un conteneur additionnel du lubrifiant dudit réducteur (50).

22. Véhicule à traction électrique **caractérisé en ce qu'**il comprend au moins un motoréducteur (51) selon l'une quelconque des revendications précédentes pour une transmission directe à ladite roue motrice (27) dudit véhicule à traction électrique.
